# FASCICULE DE BREVET EUROPEEN

(11) **EP 2 665 881 B1**
(45) Date de publication et mention de la délivrance du brevet: **15.03.2017**
(21) Numéro de dépôt: 12700402.6
(22) Date de dépôt: 17.01.2012
(51) Int. Cl.: E06B 9/11, E04F 10/06, H02J 7/34, H02J 9/06, E06B 9/68

(54) **INSTALLATION DE PROTECTION SOLAIRE, DE FERMETURE OU D'OCCULTATION COMPRENANT UNE UNITÉ D'ALIMENTATION ÉLECTRIQUE DE SECOURS POUR UN ACTIONNEUR ET PROCÉDÉ DE COMMANDE D'UNE TELLE INSTALLATION**
SONNENSCHUTZ, SCHLIESS- ODER VERDUNKELUNGSVORRICHTUNG MIT EINER RESERVESTROMVERSORGUNGSEINHEIT FÜR EINEN AKTUATOR UND VERFAHREN ZUR STEUERUNG EINER DERARTIGEN VORRICHTUNG
SUN PROTECTION, CLOSURE OR BLACKOUT APPARATUS COMPRISING A BACK-UP POWER SUPPLY UNIT FOR AN ACTUATOR AND METHOD FOR CONTROLLING SUCH AN APPARATUS

(30) Priorité: 17.01.2011 FR 1150360
(43) Date de publication de la demande: 27.11.2013
(73) Titulaire: Somfy SAS, 74300 Cluses (FR)
(72) Inventeur: TRANCHAND, Alain, F-74330 La Balme de Sillingy (FR)
(74) Mandataire: Lavoix
(86) Numéro de dépôt international: PCT/EP2012/050625
(87) Numéro de publication internationale: WO 2012/098106

(56) Documents cités:
- EP-A1- 2 065 662
- WO-A1-2005/021914
- WO-A1-2005/104342
- WO-A1-2008/047215

## Description

L'invention concerne le domaine des actionneurs électromécaniques permettant le pilotage motorisé des éléments d'occultation d'ouvertures dans un bâtiment, tels que les volets roulants. En particulier, elle concerne un dispositif de commande de secours pour un actionneur électromécanique relié à une source principale d'énergie lorsque celle-ci fait défaut.

Des dispositifs de commande de secours sont largement connus dans le domaine. Ils mettent en oeuvre principalement des moyens mécaniques permettant d'agir sur l'actionneur, et en particulier de provoquer une rotation de l'arbre de sortie de l'actionneur manuellement, par exemple par action à l'aide d'une manivelle.

Alternativement, certains dispositifs d'actionnement, en particulier dans le domaine de l'accès (portes de garage, portes enroulables commerciales) intègrent une alimentation électrique de secours. Celle-ci prend principalement l'aspect d'une batterie rechargeable, utilisée ou non en fonctionnement normal et chargée par l'intermédiaire de la liaison du dispositif d'actionnement au secteur lorsque nécessaire.

Cette intégration de la batterie de secours au niveau de chaque dispositif est nécessaire dans le cas notamment de portes coupe-feu motorisées, mais elle engendre un surcoût non-négligeable. Le problème de disponibilité d'énergie ne se pose donc pas au vu de la recharge quasi-permanente en fonctionnement normal.

On connait alternativement des dispositifs motorisés dont la source principale d'énergie est fournie par des panneaux photovoltaïques, l'énergie étant stockée dans des accumulateurs du dispositif. Certains de ces dispositifs, décrits dans les demandes DE20210770U ou JP8028163, prévoient une prise extérieure pour pouvoir raccorder le dispositif au réseau ou à une batterie auxiliaire en cas de besoin (indisponibilité d'énergie solaire pendant une longue période par exemple). Cette prise extérieure se trouve notamment au niveau du caisson de volet roulant ou dans une coulisse de guidage.

La demande de brevet JP-A-2003-035078 décrit par ailleurs un dispositif de connexion d'une alimentation à courant continu (DC) au niveau d'un point de commande d'une porte de garage, recevant également une alimentation secteur à courant alternatif (AC). La conversion AC-DC pour l'alimentation de l'actionneur est gérée au niveau du point de commande : l'actionneur lui-même n'est donc pas alimenté par le secteur. Le dispositif décrit est en outre un simple connecteur, disposant d'une part d'une connectique spécifique complémentaire de celle du point de commande, et d'autre part, d'une connectique spécifique pour un allume-cigare. A moins de prévoir une provision de câble conséquente, ce dispositif n'est donc utilisable que pour des ouvrants qui peuvent être approchés par un véhicule. Aucune autre source alternative de courant n'est détaillée.

La demande de brevet US-A-2006/0231215 décrit une alimentation portable destinée à la manoeuvre de différents volets roulants motorisés. Il est expliqué dans ce document que grâce à cette alimentation portable, il n'est pas nécessaire de relier les différents volets par l'intermédiaire d'un câble à une source d'alimentation secteur. L'alimentation portable vient se connecter dans une prise prévue à cet effet et est dimensionnée pour fournir l'énergie nécessaire au fonctionnement d'un ou plusieurs volets. Dans le but de diminuer l'énergie nécessaire à un cycle d'ouverture-fermeture, les dispositifs sont équipés d'un système de compensation mécanique, permettant de sous-dimensionner le moteur et donc l'énergie requise par celui-ci. La demande WO-A-2003/001630 procède d'une approche similaire et décrit une alimentation portable pour un store de terrasse.

Dans ces deux derniers documents, l'alimentation portable est destinée à être la source principale d'alimentation pour les dispositifs motorisés. Elle doit être dimensionnée en conséquence.

Aucun des documents précédemment cités ne fait mention de la durée de vie de ces alimentations de secours, ni de la disponibilité de l'énergie au moment où celle-ci est réellement nécessaire.

De même, dans la demande WO-A-2005/104342, il est prévu d'utiliser une unité de stockage d'énergie de type accumulateurs rechargeables, connectée sur les lignes d'alimentation de l'actionneur. Comme précédemment, ce document ne se préoccupe pas de la durée de vie de ces alimentations de secours, ni de disponibilité de la source d'énergie en cas de suppression, prolongée ou non, de l'alimentation secteur.

La problématique d'une alimentation de secours pour un actionneur normalement alimenté par une source d'énergie principale tourne autour des aspects suivants :
- Un premier aspect est lié à la nature de l'alimentation disponible. Un actionneur normalement alimenté sur le réseau reçoit une tension électrique alternative d'environ 230V, celle-ci étant ensuite transformée pour fournir l'énergie nécessaire au moteur et à l'unité électronique de pilotage. Une alimentation de secours délivre en général une tension moins élevée et continue. Il est donc nécessaire que la source d'alimentation de secours puisse être adaptée à piloter l'actionneur. Ceci est assez similaire pour d'autres sources d'énergie principale que le secteur.
- Un deuxième aspect est lié à un encombrement inutile et un stockage d'énergie non utilisée dans la majorité des cas.
   En effet, une alimentation de secours propre à un dispositif doit être en permanence rechargée pour être opérationnelle au moment opportun. En revanche, les cas d'utilisation sont rares et très ponctuels. Il en résulte pour ce stockage une dépense énergétique de « sureté » qui va à l'encontre des préconisations environnementales actuelles et un investissement sans rapport avec le taux d'utilisation.
- Un troisième aspect concerne la durée de vie des éléments de stockage. A l'inverse des piles primaires qui ont une durée de vie d'une dizaine d'années, les accumulateurs ou batteries rechargeables ont une durée de vie plus limitée et nécessitent un entretien régulier, par exemple des cycles réguliers de charge et décharge, pour néanmoins maintenir cette durée de vie.

Il existe donc un besoin d'une alimentation de secours complète pour un actionneur de manoeuvre d'un élément mobile normalement alimenté par une source d'énergie principale, qui soit simple, qui puisse être partagée entre plusieurs actionneurs et dont l'énergie soit disponible et accessible au moment opportun, c'est-à-dire lorsqu'un utilisateur a besoin de manoeuvrer les éléments mobiles alors que la source d'énergie principale n'est pas disponible.

A cet effet, l'invention concerne une installation de protection solaire, de fermeture ou d'occultation comprenant au moins un actionneur, alimenté par une source d'énergie électrique principale et un élément mobile manoeuvré par l'actionneur entre deux positions de fin de course haute et basse, cette installation comprenant une unité d'alimentation électrique de secours pourvue de moyens de connexion électrique réversible à l'actionneur et adaptés à lui fournir une énergie électrique pour son fonctionnement en l'absence de disponibilité de la source d'énergie électrique principale. Cette unité d'alimentation électrique de secours comprend une première unité de stockage d'énergie électrique dont l'énergie maximale stockée est suffisante pour plusieurs manoeuvres partielles de l'élément mobile. La puissance électrique maximale délivrée par la première unité de stockage d'énergie électrique est suffisante uniquement pour une manoeuvre partielle de l'élément mobile par l'actionneur, entre les positions de fin de course.

Grâce à l'invention, l'unité d'alimentation de secours peut être à la fois légère et peu encombrante, du fait de son dimensionnement limité dû à la puissance relativement faible délivrée par sa première unité de stockage d'énergie électrique, tout en étant suffisante pour aider un utilisateur à manoeuvrer l'élément mobile de protection solaire, de fermeture ou d'occultation en cas d'indisponibilité de la source d'alimentation principale. L'invention prend le contrepied d'une tendance naturelle à prévoir, dans l'unité d'alimentation électrique de secours, une quantité importante d'énergie avec une puissance importante. L'invention privilégie la maniabilité et le poids de cette unité par rapport au caractère complet de la manoeuvre de relevage ou d'abaissement de l'élément mobile qui peut être obtenue avec cette unité comme source d'énergie pour l'actionneur.

Selon des aspects avantageux mais non obligatoires de l'invention, une installation conforme à son principe peut incorporer une ou plusieurs des caractéristiques suivantes, prises dans toute combinaison techniquement admissible :
- La première unité de stockage d'énergie électrique comprend au moins un élément de stockage longue durée d'énergie électrique, telle qu'une pile primaire non rechargeable.
- L'unité d'alimentation de secours comprend une deuxième unité de stockage d'énergie électrique dont la puissance maximale délivrée est plus élevée que celle de la première unité de stockage d'énergie électrique.
- La deuxième unité de stockage d'énergie électrique comprend au moins un supercondensateur.
- L'énergie maximale stockée dans la deuxième unité de stockage d'énergie est inférieure à l'énergie maximale stockée dans la première unité de stockage d'énergie électrique.
- L'unité d'alimentation de secours comprend des moyens de transfert d'énergie électrique de la première vers la deuxième unité de stockage d'énergie électrique.
- La puissance électrique maximale délivrée par l'unité d'alimentation de secours est suffisante pour démarrer un moteur appartenant à l'actionneur, en libérant éventuellement un frein associé à ce moteur, sans pouvoir déplacer l'élément mobile sur une course complète, entre sa première position de fin de course et sa deuxième position de fin de course, à moins d'une assistance manuelle.
- L'unité d'alimentation électrique de secours comprend la deuxième unité de stockage d'énergie, qui comprend elle-même au moins un supercondensateur.
- L'unité d'alimentation électrique de secours comprend un interrupteur piloté d'isolement sélectif des unités de stockage par rapport à l'actionneur.
- La puissance électrique maximale délivrée par l'unité d'alimentation de secours est suffisante pour déplacer continûment l'élément mobile sur une partie de sa course complète, sans assistance manuelle.
- L'actionneur comprend un connecteur adapté pour coopérer avec les moyens de connexion de l'alimentation de secours. Avantageusement, le connecteur comprend un interrupteur basculant configuré pour déconnecter la liaison de l'actionneur avec la source d'énergie électrique principale lorsque l'unité d'alimentation de secours est connectée.

L'invention concerne également un procédé de commande du fonctionnement d'une installation telle que mentionnée ci-dessus, caractérisé en ce que, suite à un ordre de commande de mouvement, une manoeuvre correspondante de l'élément mobile est effectuée sans interruption jusqu'à une position de fin de course lorsque l'actionneur est alimenté par une source d'énergie électrique principale, alors qu'une manoeuvre correspondante de l'élément mobile est réalisée partiellement ou comporte des arrêts avant l'arrivée en fin de course lorsque l'actionneur est alimenté par une unité d'alimentation de secours telle que mentionnée ci-dessus.

Lorsqu'on utilise une unité d'alimentation de secours avec deux unités de stockage d'énergie électrique, les arrêts pendant la manoeuvre de l'élément mobile ont avantageusement lieu pendant un transfert d'énergie de la première unité de stockage d'énergie électrique vers la deuxième unité de stockage d'énergie électrique.

Dans ce cas, lorsque l'actionneur est alimenté par l'unité d'alimentation de secours, la manoeuvre de montée peut se poursuivre une fois que l'énergie électrique disponible dans la deuxième unité de stockage d'énergie électrique le permet.

L'invention sera mieux comprise et d'autres avantages de celle-ci apparaîtront plus clairement à la lumière de la description qui va suivre de plusieurs modes de réalisation de l'invention, donnée uniquement à titre d'exemple et faite en référence aux dessins annexés dans lesquels :
- la figure 1 est une représentation schématique de principe d'une installation de fermeture comprenant une unité d'alimentation de secours conforme à l'invention,
- la figure 2 est une représentation schématique de principe d'une unité d'alimentation de secours pouvant être utilisée dans l'installation de la figure 1,
- la figure 3 est une représentation analogue à la figure 2 pour une unité conforme à un deuxième mode de réalisation de l'invention,
- la figure 4 est un schéma bloc de principe d'une méthode pouvant être mise en oeuvre avec les matériels des figures 1 et 3,
- les figures 5 à 9 sont des représentations schématiques de principe de parties d'installation incorporant l'invention et
- la figure 10 est une coupe de principe de la zone de connexion entre un connecteur électrique et une partie d'une unité d'alimentation de secours conforme à l'invention.

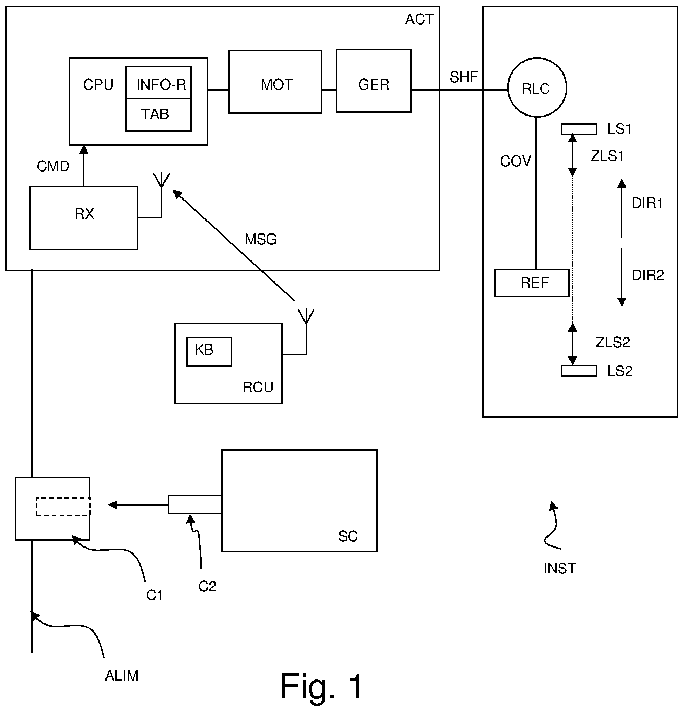

L'installation INST, représentée à la figure 1, comprend un actionneur ACT muni d'un moteur MOT dont l'arbre de sortie entraîne un réducteur GER. L'arbre de sortie SHF du réducteur GER constitue l'arbre de sortie de l'actionneur. Il est lié cinématiquement à un tube d'enroulement RLC sur lequel s'enroule un élément mobile enroulable COV. Par la commande de l'alimentation électrique du moteur, on commande ainsi les déplacements de l'élément mobile enroulable. L'extrémité inférieure de l'élément mobile enroulable COV est attachée à une lame finale REF. L'élément mobile enroulable COV peut notamment consister en un volet roulant ou un store équipant un bâtiment.

Le moteur MOT est activé dans un premier sens ou dans un deuxième sens par une unité de commande CPU de l'alimentation du moteur MOT, cette unité comprenant par exemple un microcontrôleur. L'unité de commande reçoit des ordres de commande à l'aide d'une liaison CMD avec un récepteur d'ordres RX. Les ordres de commande sont transmis à l'aide d'une interface de commande distante RCU, par exemple nomade, munie d'une interface homme-machine KB comportant au moins une touche de commande. De préférence, l'interface de commande distante RCU communique par ondes radioélectriques avec le récepteur d'ordres, comme représenté par la flèche MSG. De préférence, la liaison entre l'interface de commande et le récepteur d'ordres est de type bidirectionnel, ce qui permet d'afficher sur l'interface de commande distante RCU des messages relatifs à l'état de l'actionneur ACT.

Des valeurs internes telles que la position POS de l'élément mobile enroulable COV ou le couple TQ mécanique fourni par le moteur MOT peuvent être mesurées à partir des variables mesurées au niveau du moteur lors de son fonctionnement ou par des capteurs externes reliés à l'électronique de commande.

Le déplacement en translation de la lame finale REF est limité par une première butée de fin de course haute LS1 et/ou par une deuxième butée de fin de course basse LS2. Alternativement, les limites sont fixées par enregistrement dans l'unité de commande de valeurs de comptage correspondant à des positions extrêmes POS1, POS2 correspondant respectivement aux fins de course LS1, LS2.

L'installation INST peut également comprendre plusieurs éléments mobiles pilotés par un même actionneur ou plusieurs éléments mobiles pilotés chacun par leur propre actionneur. Elle comprend également un connecteur électrique C1 sur lequel vient se raccorder une source d'énergie électrique principale ALIM.

Ce connecteur électrique C1 comprend, outre des bornes non représentées de raccordement à la source d'énergie électrique principale ALIM, celle-ci correspondant à un système photovoltaïque ou au réseau secteur. En variante, la source d'énergie électrique principale peut comprendre ou être constituée par une batterie fixe de forte puissance nominale. Le connecteur C1 comprend également des bornes de raccordement à une unité d'alimentation de secours nomade SC indépendante. Alternativement, le connecteur C1 comprend uniquement des bornes de raccordement entre les fils d'alimentation de l'actionneur et l'unité d'alimentation de secours SC, en parallèle au réseau de connexion à la source d'alimentation ALIM. Le premier cas est cependant préféré dans la mesure où il permet une déconnexion de l'alimentation, en particulier de l'alimentation secteur, lorsque l'unité d'alimentation de secours est connectée. Ceci peut permettre de prévenir des risques de « back-feed », tels que décrits dans la demande WO-A-02/11263. Des moyens de mise en oeuvre et de réalisation technique du connecteur électrique seront décrits ci-après.

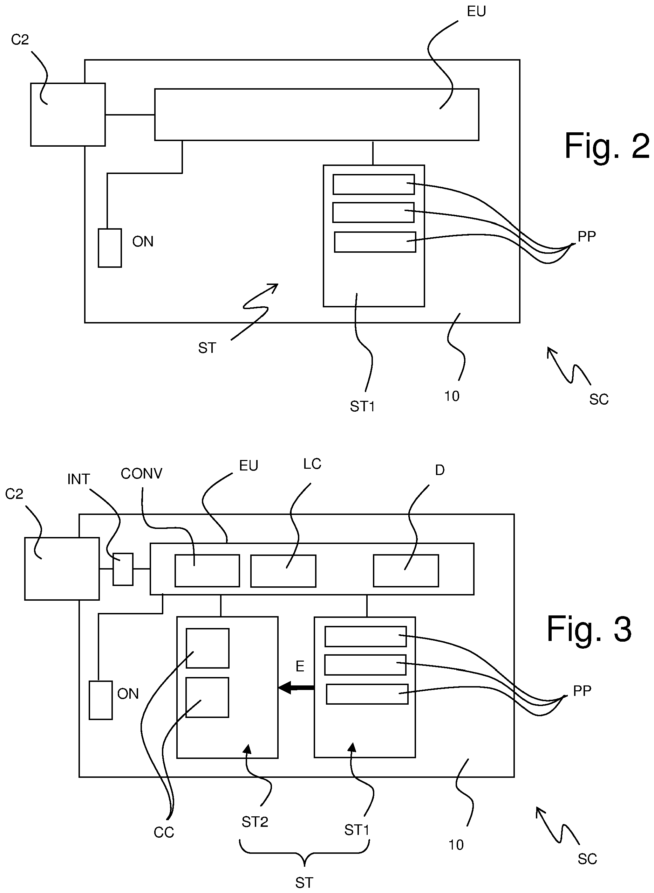

L'alimentation de secours SC est portable. Elle est décrite ci-après, en relation avec les figures 2 et 3.

L'unité d'alimentation de secours SC comprend un boîtier 10 muni d'un bornier C2 destiné à être raccordé au connecteur électrique C1 de l'installation INST, en particulier aux bornes de raccordement de celui-ci. Elle comprend également une première unité ST1 de stockage d'énergie électrique, dite unité de stockage de longue durée. Cette unité de stockage ST1 comprend, par exemple, une ou plusieurs piles primaires PP de type Manganèse Lithium Dioxyde, ayant une capacité de 1400mA.h et une tension de 3V. Ces piles primaires sont garanties 10 ans, c'est-à-dire que les courants de fuite sont négligeables dans le temps par rapport à l'énergie stockée. Elles sont ne sont pas rechargeables. Alternativement, d'autres types de piles primaires, voire des accumulateurs rechargeables garantis plusieurs années, pourraient être utilisés dans la première unité de stockage. Leur principale caractéristique reste cependant de pouvoir fournir une quantité d'énergie stable au cours du temps, hors utilisation, c'est-à-dire par exemple sur une période d'au moins 4 ans, préférentiellement d'au moins 8 ans.

En conséquence, l'unité ST1 constitue une unité de stockage longue durée d'énergie électrique.

Les piles sèches ou primaires disposent d'une quantité d'énergie importante, mais cette quantité d'énergie disponible n'est exploitable que lorsqu'un faible courant est nécessaire pour le fonctionnement de l'équipement. La puissance restituable d'une pile fait référence à son aptitude à délivrer une quantité spécifique d'énergie pendant une période définie. En effet, la pile dispose d'une résistance interne qui limite la puissance que celle-ci est capable de fournir. A partir d'un certain courant demandé, la puissance restituable de la pile tend vers zéro. La pile n'est alors globalement plus capable de fournir de l'énergie. L'accumulation de plusieurs piles ne peut compenser ce phénomène.

On note Cₘₐₓ la capacité maximale de stockage d'énergie dans l'unité ST1, c'est-à-dire la quantité maximale d'énergie électrique qui peut être stockée dans l'unité ST1. Cette capacité Cₘₐₓ est définie par construction de l'unité ST1. Une quantité d'énergie maximale Eₘₐₓ électrique est donc stockée par la première unité de stockage ST1. Elle dépend de la capacité maximale de stockage Cₘₐₓ, y compris dans le cas du couplage de plusieurs piles primaires. La façon dont elle est stockée dépend du choix des éléments de stockage de la première unité de stockage ST1.

En pratique, la quantité d'énergie maximale Eₘₐₓ électrique stockée et la façon dont cette quantité d'énergie est stockée sont choisies de telle sorte que la première unité de stockage ST1 fournisse une puissance électrique dont la valeur maximale Pₘₐₓ est insuffisante pour faire fonctionner l'actionneur ACT au cours d'un cycle complet d'ouverture, c'est-à-dire au cours d'un déplacement de l'organe mobile COV d'une position de fin de course à l'autre.

Prévoir une puissance Pₘₐₓ insuffisante pour un cycle d'ouverture complet est compatible avec une manoeuvre exceptionnelle de secours, au cours de laquelle l'utilisateur assiste manuellement la manoeuvre motorisée. L'utilisateur compense alors partiellement le poids de l'élément mobile enroulable COV, diminuant ainsi l'énergie nécessaire au pilotage en rotation du tube d'enroulement RLC. Cette puissance insuffisante est également compatible avec une manoeuvre exceptionnelle de secours, au cours de laquelle le mouvement est réalisé de manière fractionnée, comme cela sera décrit par la suite.

Dans ce mode de réalisation, l'unité de stockage ST1 est la seule unité de ce type de l'unité d'alimentation SC et constitue à elle seule l'unité ST de stockage d'énergie électrique dans l'unité SC.

En pratique, les piles PP sont sélectionnées pour stocker une quantité d'énergie leur permettant de délivrer une puissance Pₘₐₓ suffisante pour mettre en marche le moteur MOT et libérer un frein intégré au réducteur GER, lorsqu'il existe, et permettre une course complète de relevage de l'élément COV, sous réserve d'une assistance manuelle de la part de l'utilisateur.

L'unité d'alimentation de secours SC comprend également un interrupteur de mise en marche ON prévu sur le boîtier 10 et relié à une unité électronique de gestion de charge EU. L'unité électronique est elle-même reliée à la première unité de stockage ST1. Elle comprend notamment un convertisseur élévateur de tension permettant de transformer la basse tension continue, disponible en sortie de la première unité de stockage ST1, en tension exploitable par l'actionneur ACT, à savoir une tension alternative sinusoïdale, rectangulaire, une tension continue supérieure à 150V ou toute autre forme de tension exploitable.

Selon un deuxième mode de réalisation particulièrement avantageux et représenté en figure 3 avec les mêmes références que la figure précédente, l'unité d'alimentation de secours SC comprend une unité ST de stockage d'énergie électrique constituée d'une première unité ST1 de stockage d'énergie électrique et d'une deuxième unité ST2 de stockage d'énergie électrique.

La première unité ST1 constitue une unité de stockage à long terme ou de longue durée. Elle comprend des piles primaires non rechargeables PP analogues à celles de l'unité SC du premier mode de réalisation. La première unité ST1 est connectée électriquement à la deuxième unité ST2, dite unité de stockage court-terme. Cette deuxième unité de stockage comprend, par exemple, un ou plusieurs supercondensateurs CC. Ce type de composant électronique a également un fonctionnement garanti d'environ 10 ans. Il est rechargeable et permet une décharge rapide de l'énergie accumulée, satisfaisant ainsi une demande importante en courant, que ne serait pas capable de fournir la première unité de stockage d'énergie ST1 seule. En d'autres termes, la puissance électrique instantanée maximale que peut délivrer la deuxième unité ST2 est supérieure à la puissance électrique instantanée maximale que peut délivrer la première unité ST1. Ceci est dû au choix des supercondensateurs CC formant la deuxième unité de stockage qui peuvent se décharger rapidement, en délivrant un courant important, sous une tension relativement élevée.

Un supercondensateur est un condensateur de technique particulière permettant d'obtenir une densité de puissance et une densité d'énergie intermédiaire entre celles des piles ou batteries et celles des condensateurs électrolytiques classiques. Ce type de composant permet donc de stocker une quantité d'énergie intermédiaire entre celles des deux modes de stockage que sont les batteries et les condensateurs et de la restituer plus rapidement qu'une batterie ou une pile. La résistance interne des supercondensateurs est très faible, ce qui autorise une charge ou une décharge avec de forts courants.

En variante, des composants autres que des supercondensateurs peuvent être utilisés dans l'unité ST2, avec des caractéristiques comparables.

L'unité d'alimentation de secours SC comprend également un interrupteur piloté INT qui permet d'isoler sélectivement l'unité ST du bornier C2.

On définit, comme précédemment, la capacité maximale Cₘₐₓ de stockage d'énergie électrique dans l'unité ST. Cette capacité Cₘₐₓ est, en pratique, égale à la capacité maximale de stockage de la première unité de stockage ST1.

On définit, comme précédemment, la puissance électrique maximale Pₘₐₓ que peut délivrer l'unité ST et qui est égale à la puissance électrique maximale Pₘₐₓ₂ que peut délivrer l'unité ST2, laquelle est supérieure à la puissance électrique maximale Pₘₐₓ₁ que peut délivrer l'unité ST1, du fait de l'utilisation des supercondensateurs CC, comme vu ci-dessus.

Un convertisseur CONV est utilisé pour convertir la tension de sortie de l'unité ST2 en une tension exploitable par l'unité EU de l'unité SC.

L'unité électronique EU de l'unité SC d'alimentation de secours comprend un dispositif DEU de gestion de charge et un limiteur de courant LC permettant de transférer de manière optimale l'énergie nécessaire de la première à la seconde unité de stockage, ce que représente la flèche E à la figure 3.

Il n'est pas nécessaire que la capacité Cₘₐₓ soit dimensionnée pour que la quantité d'énergie maximale Eₘₐₓ stockée dans la deuxième unité de stockage ST2 induise que cette unité délivre une puissance Pₘₐₓ suffisante pour la réalisation complète du cycle d'ouverture, comme décrit précédemment pour l'unité ST1 du premier mode de réalisation. L'utilisateur peut également assister la manoeuvre en soulevant manuellement l'élément mobile.

En pratique, la quantité d'énergie électrique maximale qui peut être stockée dans l'unité ST2 est inférieure à celle qui peut être stockée dans l'unité ST1.

Alternativement, un procédé de manoeuvre par étapes peut être mis oeuvre. Ce procédé est décrit en référence à la figure 3. Selon une première étape S1, dans le cas où il souhaite actionner l'élément mobile en l'absence de disponibilité d'une alimentation principale, l'utilisateur récupère de son lieu de rangement et active l'unité d'alimentation de secours. A partir de l'activation de l'unité d'alimentation de secours, la première unité de stockage ST1 fournit de l'énergie à la deuxième unité de stockage ST2 qui la stocke de manière temporaire, au cours d'une étape S2. L'état de charge active peut être signalé par une LED clignotante, l'état de charge complète par une LED verte fixe par exemple, ou par tout autre moyen connu de l'art antérieur.

Parallèlement à l'étape de charge, l'utilisateur connecte l'unité d'alimentation de secours au connecteur C1 de l'installation au cours d'une étape R1. Il utilise ensuite l'interface de commande distante RCU de l'installation pour émettre un ordre de commande, ou « commande », par exemple une commande de mouvement vers une position finale complètement ouverte. La réception de la commande par le récepteur RX de l'actionneur ACT est soumise à la condition préalable d'alimentation de l'électronique de l'actionneur. Cette condition peut être remplie dès la connexion de l'unité d'alimentation de secours SC à l'installation INST, alors même que la puissance électrique que peut fournir la deuxième unité de stockage ST2 est largement insuffisante pour réaliser une manoeuvre, même partielle.

L'ordre de commande est alors mis en mémoire en attendant que la charge disponible dans l'unité ST2, c'est-à-dire l'énergie électrique stockée dans cette unité et la puissance électrique maximale Pₘₐₓ qu'elle peut délivrer, soient suffisantes pour exécuter la manoeuvre au moins partiellement. Cette étape R2 d'émission et réception d'une commande a pour conséquence une étape S3, au cours de laquelle la manoeuvre est démarrée, puis exécutée. Celle-ci se poursuit tant que la puissance mise à disposition par l'unité d'alimentation de secours, en particulier par l'unité de stockage court-terme ST2, est suffisante. Un test de disponibilité d'énergie est effectué régulièrement au cours d'une étape S4.

Lorsque la charge électrique de la deuxième unité de stockage ST2 devient insuffisante, l'actionneur ACT s'arrête tout en mémorisant éventuellement que l'ordre de commande n'a pas été exécuté complètement.

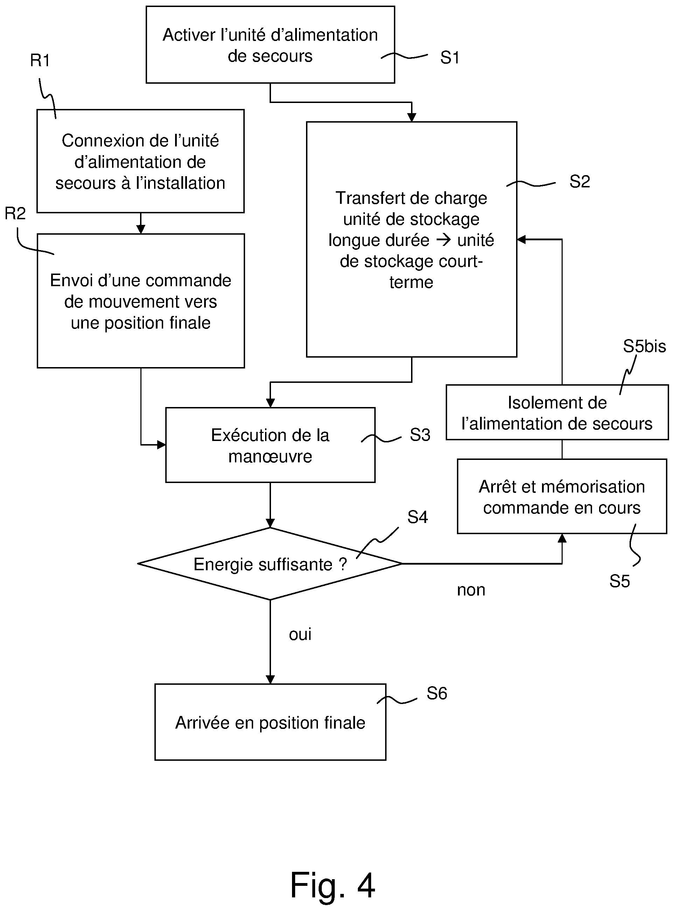

A cet instant, l'interrupteur INT est basculé en position ouverte afin d'isoler l'unité ST de la charge constituée par l'actionneur ACT. Ceci évite que le courant de charge de l'unité de stockage ST2 par l'unité de stockage ST1 ne s'écoule vers l'actionneur ACT au lieu de charger efficacement et rapidement l'unité de stockage ST2. Cet isolement est représenté par l'étape S5bis à la figure 4. Cette étape peut avoir lieu avant ou après l'étape S5. L'interrupteur INT peut être piloté par l'électronique de gestion de la charge EU de l'unité d'alimentation électrique de secours, notamment en fonction de la charge du ou des supercondensateurs CC. Alternativement, l'interrupteur INT est piloté par l'actionneur ACT lui-même, qui comprend des moyens de détection d'une baisse de puissance fournie par l'unité d'alimentation électrique de secours SC.

L'interrupteur INT peut être compris dans le boîtier de l'unité d'alimentation électrique de secours SC. Il peut alternativement être compris dans l'actionneur ACT ou dans le connecteur C1. Dans tous les cas, il permet d'isoler sélectivement l'unité ST, c'est-à-dire les unités ST1 et ST2, par rapport à l'actionneur ACT, alors que les connecteurs C1 et C2 sont raccordés l'un à l'autre.

La première unité de stockage ST1 continue alors de recharger la deuxième unité de stockage ST2. Lorsque l'unité d'alimentation de secours détermine que la charge électrique de la deuxième unité de stockage ST2 devient à nouveau supérieure à une valeur de seuil et que la puissance électrique disponible devient suffisante pour poursuivre la manoeuvre, elle assure que l'actionneur ACT se remet automatiquement en fonctionnement. Ces étapes S2, S3, S4 et S5 et S5bis sont réitérées au besoin, tant que la position finale définie dans l'ordre de commande n'est pas atteinte au cours d'une étape S6 ou si un ordre de commande différent est émis.

Dans ce cas, la capacité Cₘₐₓ est dimensionnée pour qu'environ deux étapes de charge de l'unité ST2 par l'unité ST1 soient nécessaires pour une manoeuvre complète de l'élément mobile de COV de sa fin de course basse vers sa fin de course haute.

L'unité ST2 de stockage court-terme constitue une unité principale de stockage d'énergie électrique car c'est elle qui alimente l'actionneur ACT à travers le connecteur électrique C1. L'unité de stockage long-terme ST1 est alors une unité auxiliaire dont la fonction est d'alimenter, lorsque nécessaire, l'unité principale de stockage ST2.

L'utilisateur peut alors déconnecter le boîtier 10 de l'unité d'alimentation de secours SC de l'installation, et l'utiliser éventuellement au niveau d'une autre installation dans sa maison.

Une fois toutes les manoeuvres terminées, l'utilisateur désactive l'alimentation de secours par l'intermédiaire de l'interrupteur ON et range le boîtier pour un usage ultérieur en cas de nécessité. En variante, la désactivation est automatique à partir d'une certaine temporisation d'inactivité.

Ainsi, grâce à l'invention et quel que soit le mode de réalisation, lorsque l'actionneur ACT est alimenté à partir de l'unité SC, la manoeuvre demandée est réalisée partiellement, c'est-à-dire sur une course réduite ou avec une assistance manuelle, ou comporte des arrêts permettant la recharge de la deuxième unité ST2 à partir de la première unité ST1.

Dans un mode préféré de l'invention, dès la connexion de l'alimentation de secours SC à l'installation INST, l'unité SC d'alimentation de secours fournit à l'actionneur ACT une tension particulière reconnaissable, par exemple rectangulaire ou continue, voire alternative sinusoïdale, d'un type reconnaissable par rapport à la tension de la source principale. Cette tension est utilisable par l'actionneur ACT notamment pour recevoir un ordre de commande et exécuter au moins partiellement cet ordre de commande. Pour l'exécution d'un ordre de commande, il est préférable d'attendre une première charge complète de la deuxième unité de stockage ST2. Cette charge est gérée par l'alimentation de secours.

Lors de l'émission et de la réception d'une commande, ou en cours de manoeuvre, l'actionneur ACT prend en compte le fait qu'il est alimenté à partir d'une source différente de sa source principale. Il démarre alors l'action en adaptant ses paramètres de fonctionnement, tels que sa vitesse et son couple, pour optimiser son fonctionnement vis-à-vis de la source d'énergie disponible.

En particulier, il est possible d'alimenter directement l'actionneur ACT par la première unité de stockage ST1 tant que la seconde unité de stockage ST2 n'est pas suffisamment chargée pour permettre le fonctionnement de l'actionneur ACT, ou pendant un délai prédéfini suite à une connexion. Cette alimentation directe permet alors l'alimentation exclusive de l'unité de commande CPU du moteur et notamment, la réception et la mise en mémoire d'un ordre de commande émis à partir de l'interface de commande distante. Tant qu'un seuil de charge de la seconde unité de stockage ST2 n'est pas atteint, il est possible de signaler le besoin de temporiser avant l'exécution de l'ordre de commande reçu, par l'intermédiaire de la LED du boîtier 10 de l'unité d'alimentation de secours.

L'utilisation d'une première unité ST1 de stockage long-terme permet de disposer d'une source d'énergie fiable dans le temps et disponible au moment où elle est nécessaire. Lorsque les piles primaires deviennent faibles, du fait de l'utilisation à plusieurs reprises ou sur une pluralité d'installations, le temps de charge de la deuxième unité de stockage ST2 devient plus long. Un afficheur peut permettre de visualiser un nombre moyen de cycles restant possibles.

Dans les deux modes de réalisation considérés, la quantité d'énergie électrique Eₘₐₓ stockée dans l'unité de stockage ST dépend de la capacité Cₘₐₓ et constitue une réserve d'énergie électrique disponible, avec une puissance maximale Pₘₐₓ donnée, pour une manoeuvre de secours. Dans le premier mode de réalisation, cette réserve d'énergie est disponible avec une puissance maximale Pₘₐₓ telle que l'utilisateur doit assister l'actionneur pour remonter l'élément mobile COV de sa fin de course basse LS2 à sa fin de course haute LS1 ou se contenter d'une ouverture partielle. Dans le deuxième mode de réalisation, cette réserve d'énergie est disponible par portions, avec une puissance maximale Pₘₐₓ suffisante pour la manoeuvre de l'élément mobile sur chaque portion, ces portions étant chacune effectuées après la recharge de la deuxième unité ST2 par la première unité ST1.

Dans tous les cas, la réserve d'énergie de la première unité de stockage ST1 permet à cette unité de délivrer une puissance électrique suffisante uniquement pour une manoeuvre partielle. Une manoeuvre complète nécessite alors une assistance extérieure et/ou elle est réalisée de manière discontinue, c'est-à-dire par une succession de manoeuvres partielles, avec des interruptions, de l'élément mobile COV lors du trajet entre les positions de fin de course.

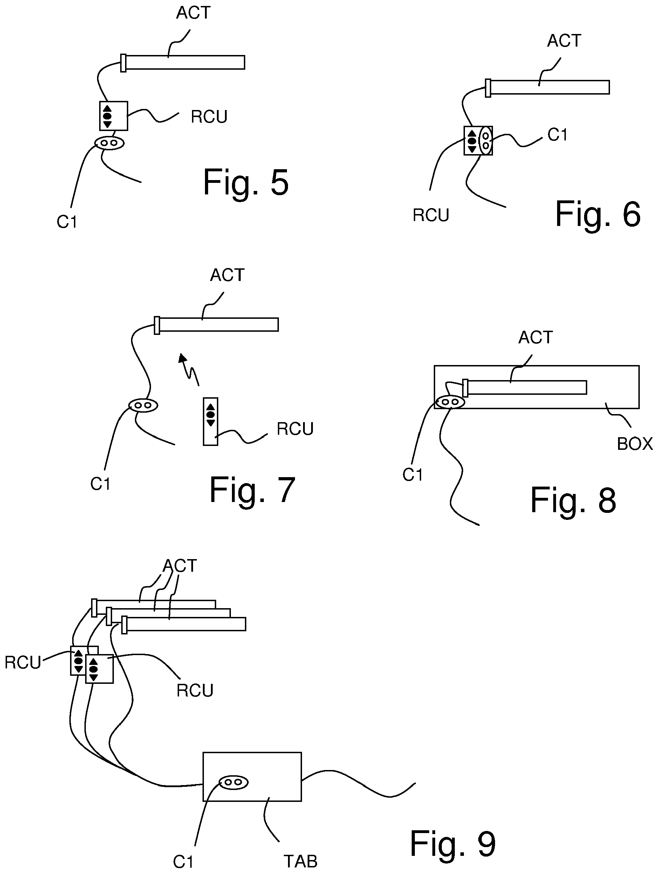

Les figures 5 à 9 montrent des exemples de montage du connecteur électrique C1 au niveau de l'installation. Celui-ci peut être installé à proximité d'un point de commande mural (fig.5), voire intégré dans ce point de commande (fig.6), pour les versions d'actionneurs à commande filaire dont le point de commande se situe sur une ligne d'alimentation de l'actionneur. Il peut être simplement monté sur la ligne d'alimentation à l'emplacement le plus approprié dans le cas où le point de commande est une télécommande nomade (fig.7).

Il peut être monté sur la ligne d'alimentation proche de l'actionneur dans une boîte de dérivation, intégré au caisson (BOX) (Fig.8). Alternativement, il peut être placé au niveau du tableau électrique (TAB) sur la ligne d'alimentation d'un ou plusieurs actionneurs (Fig. 9). Cette dernière alternative est préférée. Chaque actionneur peut ainsi être commandé successivement ; elle ne nécessite qu'un seul connecteur partagé pour toutes les installations dans le bâtiment reliées à une même source d'alimentation.

Le connecteur électrique C1 et le bornier C2 doivent avoir un fonctionnement sécurisé.

Dans un premier mode de réalisation, le connecteur électrique est un connecteur mâle. De cette façon, le bornier de l'alimentation de secours nomade est un connecteur femelle sans partie accessible, qui sécurise l'utilisateur contre des risques d'électrocution du fait de la tension générée au niveau de l'unité d'alimentation de secours.

De manière équivalente, le connecteur mâle doit être sécurisé contre un accès direct, en particulier dans le cas d'une alimentation secteur disponible à proximité de ce connecteur.

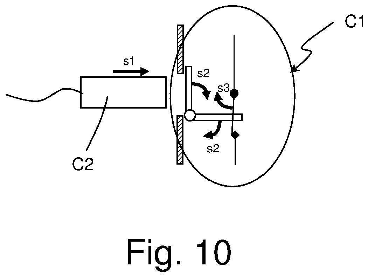

La figure 10 montre un connecteur électrique C1 équipé d'un dispositif de trappe mobile. Lorsque cette trappe est ouverte, permettant d'insérer le connecteur femelle de l'unité d'alimentation de secours (s1), une déconnexion automatique de l'alimentation principale est créée (s3), par exemple par basculement d'une partie mobile (s2). Avantageusement, l'ouverture de la trappe n'est possible qu'à l'aide d'un outil.

Pour plus de sécurité, les connecteurs mâles aptes à permettre la connexion électrique entre l'unité d'alimentation de secours SC et l'actionneur ACT ne sont en contact avec les fils d'alimentation de l'actionneur que lorsque le bornier C2 de l'unité d'alimentation de secours est en place.

Dans un autre mode de réalisation non représenté, le premier connecteur électrique C1 est un connecteur femelle sécurisé, tel qu'on en trouve sur le marché : ce connecteur électrique peut par exemple comprendre un dispositif à éclipses, ou obturateurs, ne permettant l'introduction d'un objet que si la pression sur deux éclipses est simultanée.

Le bornier C2 de l'alimentation de secours nomade est alors un connecteur mâle à deux bornes, qui doit également être sécurisé contre des risques d'électrocution de l'utilisateur du fait de la tension générée au niveau de l'unité d'alimentation de secours. En particulier, il peut être prévu qu'une tension réduite, inférieure à 24V, soit fournie tant que le connecteur n'est pas relié à l'actionneur. Lorsque l'unité d'alimentation de secours est effectivement connectée, l'actionneur ACT, et en particulier son électronique de commande CPU et/ou le récepteur radio RX, prélèvent une charge détectable, qui permet ensuite de fournir la puissance nécessaire pour le mouvement de l'élément mobile.

Toute variante de connectique est envisageable sans sortir du cadre de l'invention défini par les revendications.

En variante, l'unité de secours SC peut comprendre plusieurs unités de stockage d'énergie électrique ST.

La manoeuvre déterminante pour dimensionner la première unité de stockage peut être la remontée de l'élément mobile COV de sa position de fin de course basse LS2 vers sa position de fin de course haute LS1. En effet, c'est le cycle d'ouverture qui est généralement le plus important à pouvoir gérer lors d'une panne d'alimentation principale, dans la mesure où il est contraignant pour un utilisateur de devoir rester enfermé en plein jour (cas des tempêtes créant des perturbations de l'alimentation réseau pendant plusieurs jours). De plus, compte tenu du poids du volet, en l'absence de système de compensation, c'est généralement le cycle d'ouverture qui nécessite le plus d'énergie. La charge est menée, alors qu'elle est principalement menante lors du cycle de fermeture.

Toutefois, la manoeuvre d'abaissement, de la position de fin de course haute LS1 vers la position de fin de course basse LS2 peut également être prise en compte, en complément ou en remplacement de la manoeuvre de remontée. En effet, pour des aspects de sécurité ou confidentialité, certains utilisateurs souhaitent pouvoir manoeuvrer à la descente les volets ou stores de leur habitat, en toutes circonstances.

## Revendications

1. Installation (INST) de protection solaire, de fermeture ou d'occultation comprenant au moins un actionneur (ACT), alimenté par une source d'énergie électrique principale (ALIM) et un élément mobile (COV) manoeuvré par l'actionneur entre deux positions de fin de course haute (LS1) et basse (LS2), cette installation comprenant une unité d'alimentation électrique de secours (SC) pourvue de moyens (C2) de connexion électrique réversible à l'actionneur (ACT) et adaptés à lui fournir une énergie électrique pour son fonctionnement en l'absence de disponibilité de la source d'énergie électrique principale, cette unité d'alimentation électrique de secours (SC) comprenant une première unité (ST1) de stockage d'énergie électrique dont l'énergie maximale stockée est suffisante pour plusieurs manoeuvres partielles de l'élément mobile (COV), **caractérisée en ce que** la puissance électrique maximale (Pₘₐₓ) délivrée par la première unité (ST1) de stockage d'énergie électrique est suffisante uniquement pour une manoeuvre partielle de l'élément mobile (COV) par l'actionneur, entre les positions de fin de course.

2. Installation selon la revendication 1, **caractérisée en ce que** la première unité (ST1) de stockage d'énergie électrique comprend au moins un élément de stockage longue durée d'énergie électrique, telle qu'une pile primaire (PP) non rechargeable.

3. Installation selon l'une des revendications 1 ou 2, **caractérisée en ce qu'**elle comprend une deuxième unité (ST2) de stockage d'énergie électrique dont la puissance maximale délivrée (Pₘₐₓ₂) est plus élevée que celle (Pₘₐₓ₁) de la première unité de stockage d'énergie électrique (ST1).

4. Installation selon la revendication précédente, **caractérisée en ce que** la deuxième unité (ST2) de stockage d'énergie électrique comprend au moins un supercondensateur (CC).

5. Installation selon la revendication précédente, **caractérisée en ce que** l'énergie maximale (Eₘₐₓ) stockée dans la deuxième unité (ST2) de stockage d'énergie électrique est inférieure à l'énergie maximale stockée dans la première unité (ST1) de stockage d'énergie électrique.

6. Installation selon l'une des revendications 3 à 5, **caractérisée en ce qu'**elle comprend des moyens (EU) de transfert d'énergie électrique (E) de la première unité (ST1) vers la deuxième unité (ST2).

7. Installation selon la revendication 3, **caractérisée en ce que** l'unité d'alimentation électronique de secours (SC) comprend la deuxième unité (ST2) de stockage d'énergie qui comprend elle-même au moins un supercondensateur (CC).

8. Installation selon la revendication 7, **caractérisée en ce que** l'unité d'alimentation électrique de secours (SC) comprend un interrupteur piloté (INT) d'isolement sélectif des unités de stockage (ST1, ST2) par rapport à l'actionneur (ACT) de l'installation (INST).

9. Installation selon l'une des revendications précédentes, **caractérisée en ce que** la puissance électrique maximale (Pₘₐₓ) délivrée par l'unité d'alimentation de secours (SC) est suffisante pour démarrer un moteur (MOT) appartenant à l'actionneur, en libérant éventuellement un frein (GER) associé à ce moteur, sans pouvoir déplacer l'élément mobile (COV) sur une course complète, entre sa première et sa deuxième position de fin de course (LS1, LS2), à moins d'une assistance manuelle.

10. Installation selon l'une des revendications 1 à 6, **caractérisée en ce que** la puissance électrique maximale (Pₘₐₓ) délivrée par l'unité d'alimentation de secours (SC) est suffisante pour déplacer continûment l'élément mobile (COV) par l'actionneur sur une partie de sa course complète de relevage, sans assistance manuelle.

11. Installation selon l'une des revendications précédentes, **caractérisée en ce que** l'actionneur comprend ou est raccordé électriquement à un connecteur (C1) adapté pour coopérer avec les moyens (C2) de connexion de l'alimentation de secours (SC).

12. Installation selon la revendication 11, **caractérisée en ce que** le connecteur (C1) comprend un interrupteur basculant configuré pour déconnecter la liaison de l'actionneur (ACT) avec la source d'énergie électrique principale (ALIM) lorsque l'unité d'alimentation de secours (SC) est connectée à ce connecteur.

13. Procédé de commande du fonctionnement d'une installation (INST) selon l'une des revendications précédentes, dans lequel, suite à un ordre de commande de mouvement, une manoeuvre correspondante de l'élément mobile est effectuée sans interruption jusqu'à une position de fin de course (LS1, LS2) lorsque l'actionneur est alimenté par une source d'énergie électrique principale (ALIM), **caractérisé en ce qu'**une manoeuvre de l'élément mobile est réalisée partiellement ou comporte des arrêts (S5) avant l'arrivée en fin de course lorsque l'actionneur est alimenté par l'unité d'alimentation de secours (SC).

14. Procédé selon la revendication 13, **caractérisé en ce que** l'installation est selon l'une des revendications 3 à 6 et **en ce que** les arrêts (S5) pendant la manoeuvre de l'élément mobile (COV) ont lieu pendant un transfert d'énergie de la première unité (ST1) de stockage d'énergie électrique vers la deuxième unité (ST2) de stockage d'énergie électrique.

15. Procédé selon la revendication précédente, **caractérisé en ce que** lorsque l'actionneur (ACT) est alimenté par l'unité d'alimentation de secours (SC), la manoeuvre de montée se poursuit une fois que l'énergie électrique disponible dans la deuxième unité (ST2) de stockage d'énergie électrique le permet.

## Patentansprüche

1. Sonnenschutz-, Schließ- oder Verdunkelungseinrichtung (INST), die mindestens eine Stellvorrichtung (ACT), die von einer elektrischen Hauptenergiequelle (ALIM) versorgt wird, und ein bewegliches Element (COV), das von der Stellvorrichtung zwischen zwei Endlagen, einer oberen Endlage (LS1) und einer unteren Endlage (LS2), betätigt wird, umfasst, wobei diese Einrichtung eine elektrische Hilfsversorgungseinheit (SC) umfasst, die mit Mitteln (C2) zur reversiblen elektrischen Verbindung mit der Stellvorrichtung (ACT) versehen ist, welche ausgebildet sind, ihr eine elektrische Energie für ihren Betrieb in Abwesenheit der Verfügbarkeit der elektrischen Hauptenergiequelle zu liefern, wobei diese elektrische Hilfsversorgungseinheit (SC) eine erste Einheit (ST1) zum Speichern von elektrischer Energie umfasst, deren maximal gespeicherte Energie für mehrere Teilbetätigungen des beweglichen Elements (COV) ausreichend ist, **dadurch gekennzeichnet, dass** die maximale elektrische Leistung (Pₘₐₓ), die von der ersten Einheit (ST1) zum Speichern von elektrischer Energie geliefert wird, nur für eine Teilbetätigung des beweglichen Elements (COV) durch die Stellvorrichtung zwischen den Endlagen ausreichend ist.

2. Einrichtung nach Anspruch 1, **dadurch gekennzeichnet, dass** die erste Einheit (ST1) zum Speichern von elektrischer Energie mindestens ein Langzeitspeicherelement für elektrische Energie, wie eine nicht nachladbare Primärbatterie (PP), umfasst.

3. Einrichtung nach einem der Ansprüche 1 oder 2, **dadurch gekennzeichnet, dass** sie eine zweite Einheit (ST2) zum Speichern von elektrischer Energie umfasst, deren maximal gelieferte Leistung (Pₘₐₓ₂) höher ist als die (Pₘₐₓ₁) der ersten Einheit (ST1) zum Speichern von elektrischer Energie.

4. Einrichtung nach dem vorhergehenden Anspruch, **dadurch gekennzeichnet, dass** die zweite Einheit (ST2) zum Speichern von elektrischer Energie mindestens einen Superkondensator (CC) umfasst.

5. Einrichtung nach dem vorhergehenden Anspruch, **dadurch gekennzeichnet, dass** die in der zweiten Einheit (ST2) zum Speichern von elektrischer Energie gespeicherte Maximalenergie (Eₘₐₓ) kleiner ist als die in der ersten Einheit (ST1) zum Speichern von elektrischer Energie gespeicherte Maximalenergie.

6. Einrichtung nach einem der Ansprüche 3 bis 5, **dadurch gekennzeichnet, dass** sie Mittel (EU) zum Übertragen von elektrischer Energie (E) von der ersten Einheit (ST1) zu der zweiten Einheit (ST2) umfasst.

7. Einrichtung nach Anspruch 3, **dadurch gekennzeichnet, dass** die Hilfseinheit (SC) zur elektrischen Versorgung die zweite Einheit (ST2) zum Speichern von Energie umfasst, die selbst mindestens einen Superkondensator (CC) aufweist.

8. Einrichtung nach Anspruch 7, **dadurch gekennzeichnet, dass** die Hilfseinheit (SC) zur elektrischen Versorgung einen gesteuerten Unterbrecher (INT) zum selektiven Trennen der Speichereinheiten (ST1, ST2) in von der Stellvorrichtung (ACT) der Einrichtung (INST) umfasst.

9. Einrichtung nach einem der vorhergehenden Ansprüche, **dadurch gekennzeichnet, dass** die von der Hilfsversorgungseinheit (SC) gelieferte maximale elektrische Leistung (Pₘₐₓ) ausreichend ist, um einen zu der Betätigungsvorrichtung gehörenden Motor (MOT) zu starten, wobei gegebenenfalls eine diesem Motor zugeordnete Bremse (GER) gelöst wird, ohne das bewegliche Element (COV) über einen vollständigen Weg zwischen seiner ersten und seiner zweiten Endlage (LS1, LS2) zu bewegen, es sei denn mittels einer manuellen Hilfe.

10. Einrichtung nach einem der Ansprüche 1 bis 6, **dadurch gekennzeichnet, dass** die von der Hilfsversorgungseinheit (SC) gelieferte maximale elektrische Leistung (Pₘₐₓ) ausreichend ist, um das bewegliche Element (COV) ohne manuelle Hilfe durch die Stellvorrichtung ununterbrochen über einen Teil seines vollständigen Hebeweges zu bewegen.

11. Einrichtung nach einem der vorhergehenden Ansprüche, **dadurch gekennzeichnet, dass** die Stellvorrichtung ein elektrisches Verbindungselement (C1) umfasst oder an dieses angeschlossen ist, das geeignet ist, mit den Mitteln (C2) zur Verbindung mit der Hilfsversorgung (SC) zusammenzuarbeiten.

12. Einrichtung nach Anspruch 11, **dadurch gekennzeichnet, dass** das Verbindungselement (C1) einen Kippschalter umfasst, der ausgebildet ist, die Verbindung der Stellvorrichtung (ACT) zu der elektrischen Hauptenergiequelle (ALIM) zu trennen, wenn die Hilfsversorgungseinheit (SC) mit diesem Verbindungselement verbunden ist.

13. Verfahren zur Steuerung des Betriebs einer Einrichtung (INST) nach einem der vorhergehenden Ansprüche, bei dem auf einen Bewegungssteuerbefehl hin eine entsprechende Betätigung des beweglichen Elements ohne Unterbrechung bis zu einer Endlage (LS1, LS2) durchgeführt wird, wenn die Stellvorrichtung von einer elektrischen Hauptenergiequelle (ALIM) versorgt wird, **dadurch gekennzeichnet, dass** eine Betätigung des beweglichen Elements teilweise vorgenommen wird oder Unterbrechungen (S5) vor der Ankunft in der Endlage aufweist, wenn die Stellvorrichtung durch die Hilfsversorgungseinheit (SC) versorgt wird.

14. Verfahren nach Anspruch 13, **dadurch gekennzeichnet, dass** die Einrichtung nach einem der Ansprüche 3 bis 6 ausgebildet ist und dass die Unterbrechungen (S5) während der Betätigung des beweglichen Elements (COV) während einer Energieübertragung von der ersten Einheit (ST1) zum Speichern von elektrischer Energie zu der zweiten Einheit (ST2) zum Speichern von elektrischer Energie stattfinden.

15. Verfahren nach dem vorhergehenden Anspruch, **dadurch gekennzeichnet, dass**, wenn die Stellvorrichtung (ACT) von der Hilfsversorgungseinheit (SC) versorgt wird, die Aufwärtsbetätigung fortgesetzt wird, sobald die in der zweiten Einheit (ST2) zum Speichern von elektrischer Energie verfügbare elektrische Energie es gestattet.

## Claims

1. A sun protection, closure or black out installation (INST) comprising at least one actuator (ACT) powered by a main electric energy source (ALIM) and a mobile element (COV) maneuvered by the actuator between two end-of-travel positions, high (LS1) and low (LS2), this installation comprising a back-up electric power supply unit (SC) provided with means (C2) for reversible electric connection to the actuator (ACT) and adapted so as to provide it with electric power for its operation in the absence of availability of the main electric energy source, this back-up electric power supply unit (SC) comprising a first electric power storage unit (ST1), the maximum stored energy of which is sufficient for several partial maneuvers of the mobile element (COV), **characterized in that** the maximum electric power (Pₘₐₓ) delivered by the first electric power storage unit (ST1) is sufficient only for partial maneuvering of the mobile element (COV) by the actuator, between the end-of-travel positions.

2. The installation according to claim 1, **characterized in that** the first electric power storage unit (ST1) comprises at least one long lasting electric power storage element, such as a non-rechargeable primary battery cell (PP).

3. The installation according to one of claims 1 or 2, **characterized in that** it comprises a second electric power storage unit (ST2), the maximum delivered power (Pₘₐₓ₂) of which is greater than that (Pₘₐₓ₁) of the first electric power storage unit (ST1).

4. The installation according to the preceding claim, **characterized in that** the second electric power storage unit (ST2) comprises at least one supercapacitor (CC).

5. The installation according to the preceding claim, **characterized in that** the maximum stored energy (Eₘₐₓ) in the second electric power storage unit (ST2) is less than the maximum storage energy in the first electric power storage unit (ST1).

6. The installation according to one of claims 3 to 5, **characterized in that** it comprises means (EU) for transferring electric energy (E) from the first unit (ST1) to the second unit (ST2).

7. The installation according to claim 3, **characterized in that** the back-up electric power supply unit (SC) comprises the second electric power storage unit (ST2) which comprises itself at least one supercapacitor.

8. The installation according to claim 7, **characterized in that** the back-up electric power supply unit (SC) comprises a controlled switch (INT) for selective isolation of the storage units (ST1, ST2) relatively to the actuator (ACT) of the installation (INST).

9. The installation according to one of the preceding claims, **characterized in that** the maximum electric power (Pₘₐₓ) delivered by the back-up power supply unit (SC) is sufficient for starting a motor (MOT) belonging to the actuator, possibly by releasing a brake (GER) associated with this motor, without being able to displace the mobile element (COV) over complete travel, between its first and second end-of-travel position (LS1, LS2), unless assisted manually.

10. The installation according to one of claims 1 to 6, **characterized in that** the maximum electric power (Pₘₐₓ) delivered by the back-up power supply unit (SC) is sufficient for continuously displacing the mobile element (COV) by the actuator on a portion of its complete raising travel, without manual assistance.

11. The installation according to one of the preceding claims, **characterized in that** the actuator comprises or is electrically connected to a connector (C1) adapted for cooperating with the means (C2) for connecting the back-up power supply (SC).

12. The installation according to claim 11, **characterized in that** the connector (C1) comprises a toggle switch configured for disconnecting the connection of the actuator (ACT) with the main electric energy source (ALIM) when the back-up power supply unit (SC) is connected to this connector.

13. A method for controlling the operation of an installation (INST) according to one of the preceding claims, where, following a command for control of movement, a corresponding maneuver of the mobile element is carried out without interruption as far as an end-of-travel position (LS1, LS2) when the actuator is powered by a main electric energy source (ALIM), **characterized in that** a maneuver of the mobile element is partly carried out or includes stops (S5) before arriving at the end-of-travel when the actuator is powered by the back-up power supply unit (SC).

14. The method according to claim 13, **characterized in that** the installation is according to one of claims 3 to 6 and **in that** the stops (S5) during the maneuver of the mobile element (COV) take place during a transfer of energy from the first electric power storage unit (ST1) to the second electric power storage unit (ST2).

15. The method according to the preceding claim, **characterized in that**, when the actuator (ACT) is powered by the back-up power supply unit (SC), the raising maneuver is continued as soon as the electric energy available in the second electric power storage unit (ST2) allows this.
